# EUROPÄISCHE PATENTSCHRIFT

(11) **EP 1 386 456 B1**
(45) Veröffentlichungstag und Bekanntmachung des Hinweises auf die Patenterteilung: **24.01.2007**
(21) Anmeldenummer: 02716604.0
(22) Anmeldetag: 20.02.2002
(51) Int. Cl.: H04L 12/58

(54) **Benachrichtigung im Multimedia Messaging Service (MMS)**
Messaging via a multimedia messaging service (MMS)
Notification dans un service de messagerie multimedia (MMS)

(30) Priorität: 10.04.2001 DE 10117895
(43) Veröffentlichungstag der Anmeldung: 04.02.2004
(73) Patentinhaber: SIEMENS AKTIENGESELLSCHAFT, 80333 München (DE)
(72) Erfinder: PRENZEL, Ralf, 38259 Salzgitter (DE); SCHMIDT, Andreas, 38114 Braunschweig (DE); TRAUBERG, Markus, 38159 Velchede (DE)
(86) Internationale Anmeldenummer: PCT/DE2002/000631
(87) Internationale Veröffentlichungsnummer: WO 2002/084961

(56) Entgegenhaltungen:
- EP-A- 0 866 586
- EP-A- 0 869 690
- WO-A-00/64110
- WO-A-01/33782
- WO-A-01/62023
- US-A- 5 875 302

## Beschreibung

### Stand der Technik

Die vorliegende Erfindung betrifft eine Vorrichtung zur Übertragung einer Nachricht mit einer Datenhalteeinrichtung zum Bereitstellen der Nachricht und einer Sendeeinrichtung zum Senden einer Benachrichtigung an einen Empfänger, falls in der Datenhalteeinrichtung eine Nachricht für den Empfänger bereitsteht, und zum Senden der Nachricht an den Empfänger auf dessen Anfrage hin oder bedingungslos. Darüber hinaus betrifft die vorliegende Erfindung eine Vorrichtung zum Empfangen und Bereitstellen einer Nachricht mit einer Empfangseinrichtung zum Empfangen der Nachricht von einer Relaisstation und zum Empfangen einer Benachrichtigung, die angibt, dass in der Relaisstation eine Nachricht für den Empfänger bereitsteht. Ferner betrifft die vorliegende Erfindung entsprechende Übertragungs- und Empfangsverfahren.

Das Mobilfunksystem GSM (GSM - Global System for Mobile Communications) bietet neben der Sprachtelephonie auch die Möglichkeit, kurze Textnachrichten von bis zu 160 Zeichen Länge zu versenden bzw. zu empfangen. Dieser Dienst heißt Short Message Service (SMS).

Für das Mobilfunksystem der dritten Generation UMTS (Universal Mobile Telecommunication System) wird zur Zeit eine multimediafähige Variante eines mobilen Nachrichtendienstes standardisiert, der sogenannte Multimedia Messaging Service (MMS). Einschlägige Standardisierungsprotokolle sind: *3G TS 23.140* version 4.1.0, Release 4; Third Generation Partnership Project; Technical Specification Group Terminals; Multimedia Message Service (MMS); Functional Description; Stage 2, *WAP-209-MMSEncapsulation*, Release 2000; Wireless Application Protocol; WAP Multimedia Messaging Service; Message Encapsulation; MMS Proposed SCD 1.0 und *3G TS 22.140* v.4.0.1 (Juli 2000): 3^{rd} Generation Partnership Project; Technical Specification Group Services and System Aspects; Service Aspects; Stage 1 Multimedia Messaging Service.

Nachrichten mit multimedialen Inhalten werden im Folgenden zur besseren Abgrenzung von den Textnachrichten des SMS nur noch kurz MM (Multimedia Message) genannt. Im Gegensatz zum SMS entfällt die Beschränkung auf reine Textinhalte. Beim MMS wird es auch möglich sein, Texte dem individuellen Geschmack entsprechend zu formatieren, sowie beliebige Inhalte in eine Nachricht einzubetten. Dazu zählen z.B. Audio- und Videoinhalte, Standbilder, Grafiken, Texte, u.a.

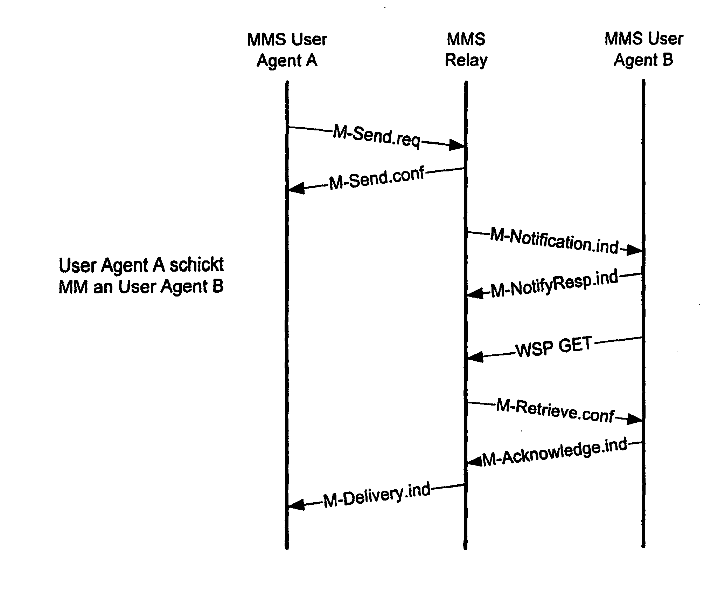

Nach dem bisherigen Stand der Technik ist eine Implementierung von MMS lediglich über WAP (Wireless Application Protocol) realisierbar. Zur Überbrückung der Luftschnittstelle zwischen einem MMS-tauglichen Endgerät und dem WAP Gateway ist nach *WAP-209-MMSEncapsulation* und *WAP-203-WSP* die Benutzung des WAP Wireless Session Protocols (WSP) vorgesehen. Die beigefügte Zeichnung zeigt ein sogenanntes Transaction Flow Diagramm nach heutigem Stand der Technik gemäß *WAP-209-MMSEncapsulation,* in dem der Austausch der WAP Messages zwischen den drei beteiligten Instanzen MMS User Agent A, MMS Relay und MMS User Agent B bei Versand bzw. Empfang einer MM dargestellt ist. Unter MMS User Agent versteht man eine Applikation auf einem Mobilfunkgerät oder auf einem an ein Mobilfunkgerät angeschlossenen Gerät (z.B. Laptop, o.ä.), welche die MMS-Funktionalität realisiert. Ein MMS Relay bzw. eine MMS-Relaisstation ist ein Netzelement beim MMS Service Provider, das den MMS User Agents die MMS-Funktionalität zur Verfügung stellt.

Informationsübertragung zwischen den Benutzern erfolgt durch Nachrichten, den sogenannten Messages. Eine Message besteht grundsätzlich aus einem Header und optional einem Datenteil (sogenannter Body Part), der die Multimediaobjekte enthält.

Darüber hinaus werden zwischen den an der Nachrichtenübertragung beteiligten technischen Einrichtungen und Benutzern Benachrichtigungen versandt, die über den Status der jeweiligen Nachrichten informieren. So informiert beispielsweise die Benachrichtigung M-Notification.ind den Empfänger über das Bereitstehen einer Nachricht in der Relaisstation MMS-Relay. Sowohl die Nachrichten als auch die Benachrichtigungen sind in der Zeichnung ("User Agent A schickt MM an User Agent B") mit Pfeilen dargestellt.

Ein weiteres, sehr verbreitetes System stellt Internet E-Mail dar, wie es in *RFC822: "Standard for the Format of ARPA In*ternet Text *Messages",* Crocker D., August 1982. URL: ftp://ftp.isi.edu/in-notes/rfc822.txt beschrieben ist. Prinzipiell bietet Internet E-Mail ähnliche Funktionen wie MMS, wird aber bisher fast ausschließlich für festnetzgebundene Terminals verwendet. Im Unterschied zu Internet E-Mail ist im MMS zusätzlich zum Download der Nachricht selbst die vorherige Benachrichtigung des Empfängers über das Vorliegen einer zustellungsbereiten MM realisiert. Der Empfänger kann nach Erhalt der Benachrichtigung, die auf sein Terminal "gepusht" wird, d.h. ohne eigene Initiative zu seinem Terminal übertragen wird, entscheiden, ob er die Nachricht selbst unmittelbar auf sein Terminal laden will oder die Nachricht wahlweise erst später oder gar nicht auf sein Terminal laden will. Das Verhalten des Terminals bezüglich des Downloads einer Nachricht nach Erhalt der Benachrichtigung ist also durch den Empfänger sehr flexibel zu gestalten.

Stand der Technik ist außerdem, dass der Sender einer Nachricht dieser eine erhöhte Wichtigkeit zuweisen kann. Diese Information wird in der WAP-Implementierung des MMS in Form eines Feldes im Header der MM (Priority field gemäß *WAP-209-MMSEncapsulation)* codiert, die vom sendenden MMS User Agent A zum MMS Relay (in WAP: M-Send.req) und vom MMS Relay zum empfangenden MMS User Agent B (in WAP: M-Retrieve.conf) übertragen wird. Nachteilig dabei ist, dass der Empfänger erst mit der Nachricht selbst Informationen über deren Wichtigkeit erhält.

Das Dokument US 5,875,302 beschäftigt sich mit einem Kommunikationsmanagementsystem, bei dem nach Empfang einer Nachricht eine Benachrichtigung an einen Empfänger übermittelt. Der Empfänger kann aufgrund des Erhalts der Benachrichtigung auf die Nachricht zugreifen. Dem Empfänger wird eine Benachrichtigung nur dann übermittelt, falls eine Wichtigkeit der Nachricht gleich oder höher einer benutzerspezifischen Wichtigkeit ist.

Das Dokument EP 0 866 586 beschreibt ein Nachrichtenübertragungssystem zum Übertragen von E-Mail-Nachrichten in einem Netzwerk, wobei ein Benutzer Eigenschaften zum Darstellen der E-Mail-Nachricht an einem Bildschirm kontrollieren kann. E-Mail-Nachrichten können dabei eine unterschiedliche Priorität von Darstellattributen aufweisen..

Die Aufgabe der vorliegenden Erfindung besteht somit darin, eine Vorrichtung und ein Verfahren Empfangen von Multimedianachrichten vorzuschlagen, bei denen der Empfänger Informationen über die Wichtigkeit einer bereitstehenden Nachricht erhalten kann, ohne die Nachricht selbst abzurufen.

Erfindungsgemäß wird diese Aufgabe gelöst durch eine Vorrichtung nach Anspruch 1 und ein Verfahren nach Anspruch 6 zum Empfangen einer Nachricht.

Vorteilhafte Weiterbildungen der Erfindung finden sich in den Unteransprüchen.

Bisher war in der WAP-Implementierung des MMS die Codierung der Wichtigkeit einer MM in der Benachrichtigung (in WAP: *M-Notification.ind)* nicht definiert. Es fehlte also die Möglichkeit, dem empfangenden *MMS User Agent B* diese Informationen bereits frühzeitig zu übermitteln, so dass der Empfänger sein Verhalten von dieser Information abhängig machen kann

Erfindungsgemäß wird somit eine Kennzeichnungsmöglichkeit der Wichtigkeit der Nachricht (MM) in der Benachrichtigung (in WAP: *M-Notification.ind)* im Multimedia Messaging Service eingeführt. Die Codierung der entsprechenden Information erfolgt vorteilhafterweise im Header einer MM. Damit kann auch die Option eröffnet werden, das Verhalten des empfangenden MMS *User* Agent *B* von der Kennzeichnung der Wichtigkeit der MM in der Benachrichtigung abhängig zu machen. Im MMS ist vorgesehen, die MM selbst entweder unmittelbar nach Erhalt der Benachrichtigung (immediate retrieval) oder wahlweise erst zu einem späteren Zeitpunkt (deferred retrieval) auf das Terminal zu laden. Das Verhalten des empfangenden *MMS User Agent B* ist in den Spezifikationen *3G TS 23.140, WAP-209-MMSEncapsulation* und *3G TS 22.140* nicht definiert. Gemäß der vorliegenden Erfindung kann der empfangende *MMS User Agent B.* so konfiguriert werden, dass eine MM in Abhängigkeit der in der zugehörigen Notification bzw. Benachrichtigung angegebenen Wichtigkeit die MM entweder unmittelbar oder erst auf Veranlassung durch den Empfänger zum empfangenden *MMS User Agent B* übertragen wird.

Die vorliegende Erfindung wird nun anhand der beigefügten Zeichnung näher erläutert, die ein MMS-Transaction-Flow-Diagram in der WAP-Implementierung zeigt.

Die beigefügten Tabellen zeigen konkrete Ausführungsbeispiele, insbesondere
Tabelle 1 eine Zuweisung binärer Codes zu Header-Feld-Namen gemäß *WAP-209-MMSEncapsulation;*
Tabelle 2 eine Codierung des Prioritätsfelds;
Tabelle 3 Header-Felder der WAP-Nachricht M-Send.req;
Tabelle 4 Header-Felder der WAP-Nachricht M-Notification.ind; und
Tabelle 5 Header-Felder der WAP-Nachricht M-Retrieve.conf.

Im nun folgenden Ausführungsbeispiel der vorliegenden Erfindung wird die vorgeschlagene Möglichkeit, die Wichtigkeit einer MM in der Benachrichtigung des empfangenden MMS User Agent B zu codieren, anhand der WAP-Implementierungen der Nachrichten bzw. Messages demonstriert.
Dabei wird beispielhaft folgendes Szenario angenommen: MMS User A verschickt eine MM mit einem Text als Inhalt an einen Empfänger MMS User B.

Die folgenden Messages werden zwischen den Einheiten übertragen.

Die MM wird vom Sender gemäß dem Stand der Technik mit einer hohen Wichtigkeit in der in der Zeichnung dargestellten Nachricht (M-Send.req) von der Applikation MMS User Agent A des MMS User A an das MMS Relay gekennzeichnet.

### M-Send.req (MMS User Agent A → MMS Relay):

X-Mms-Message-Type: m-send-req
X-Mms-Transaction-ID: TRANSACTION-ID#1
X-Mms-Version: 1.0
Date: Fri, 14 Jul 2000 14:12:19 +0100
From: usera@siemens.de
To: userb@siemens.de
Subject: Foto vom Laboraufbau
X-Mms-Priority: High
nEntries: 1
HeadersLen: XX
DataLen: XX
Content-Type: text/plain;
Hallo User B,
schicke mir bitte ganz dringend das Bild von unserem Laboraufbau zu!
MfG
User A

Die Message M-Send.req enthält im Datenteil lediglich eine Textnachricht, auf die jedoch mit einer Nachricht, die ein Foto enthalten soll umgehend geantwortet werden soll.

Der Header der Nachricht M-Send.req besitzt mehrere Felder, die eine Auswahl aus der Tabelle 1 darstellt, in der den Feldnamen Binärcodes zugewiesen sind. Das Prioritätsfeld X-Mms-Priority kann, wie in Tabelle 2 dargestellt ist, gemäß *WAP-209-MMSEncapsulation* die Werte niedrig (low), normal und hoch (high) annehmen. Diese Werte sind hier beispielhaft als Prioritäts- bzw. Wichtigkeitswerte codiert.

In der allgemeinsten Form besitzt der Header der WAP-Message M-Send.req den in Tabelle 3 dargestellten Aufbau. Dabei sind einige Felder obligatorisch und andere optional zu belegen.

Die Sendeanfrage (in WAP: M-Send.req) des MMS User Agent A wird gemäß der Zeichnung mit einer Message (in WAP: M-Send.conf) vom MMS Relay quittiert.

Der Empfänger der MM, User B, wird über die neue Nachricht, die für ihn vorliegt, durch eine Nachricht M-Notification.ind an den MMS User Agent B informiert. Neu gemäß dieser Erfindung ist die in der Notification enthaltene Information über die Wichtigkeit X-Mms-Priority der MM.

### M-Notification.ind (MMS Relay → MMS User Agent B):

X-Mms-Message-Type: m-notification-ind
X-Mms-Transaction-ID: TRANSACTION-ID#2
X-Mms-version: 1.0
From: usera@siemens.de
X-Mms-Message-Class: Personal
X-Mms-Message-Size: XXX (Attachments + Header)
X-Mms-Expiry: 3600
X-Mms-Content-Location: www.siemens.de/mms-inbox/ABCD.1234
Subject: Foto vom Laboraufbau
X-Mms-Priority: High

Die allgemeine Form dieser Message M-Notification.ind ist in Tabelle 4 dargestellt. Erfindungsgemäß wurde das Feld X-Mms-Priority von der Message M-Send.req auf die Message M-Notification.ind übertragen. Dementsprechend ist auch hier die Wichtigkeit der Nachricht gemäß Tabelle 3 codiert. Die Wichtigkeit lässt sich aber auch in zwei oder mehr Werten codieren. Die übrigen Felder der Tabelle 4 sind in *WAP-209-MMSEncapsulation* näher beschrieben.

Die Übertragung der Message M-Notification.ind von der Relaisstation MMS Relay zu der Applikation MMS User Agent B wird gemäß der Zeichnung durch die Message M-NotifyResp.ind bestätigt.

Der Download der MM wird durch den Befehl *WSP GET.req* veranlasst. Die MM wird darauf vom *MMS Relay* in der Message *M-*Retrieve.conf zum *MMS User Agent B* gesendet. Basierend auf der Information, dass die MM eine hohe Priorität hat, kann der Empfänger *MMS User Agent B* so konfiguriert sein, dass die MM unmittelbar nach Erhalt und Auswertung der Notification heruntergeladen wird.

### M-Retrieve.conf (MMS Relay → MMS User Agent B):

X-Mms-Message-Type: m-retrieve-conf
X-Mms-Transaction-ID: TRANSACTION-ID#3
X-Mms-Version: 1.0
Date: Fri, 14 Jul 2000 14:12:19 +0100
From: usera@siemens.de
To: userb@siemens.de
X-Mms-Message-ID: MESSAGE-ID#1
Subject: Foto vom Laboraufbau
X-Mms-Priority: High
Content-Type: text/plain;
nEntries: 1
HeadersLen: XX
DataLen: XX
Hallo User B,
schicke mir bitte ganz dringend das Bild von unserem Laboraufbau zu!
MfG
User A

In der Nachricht *M-Retrieve.conf* ist das Header-Feld X-Mms-Priority ebenfalls enthalten, wie in Tabelle 5 gezeigt ist. Tabelle 5, die ebenfalls *WAP-209-MMSEncapsulation* entnommen ist, zeigt wiederum die obligatorisch und optional zu belegenden Felder der Message.

Gemäß der Zeichnung wird das Empfangen der Nachricht durch den MMS User Agent B durch die Message M-Acknowledge.ind an MMS Relay bestätigt. MMS Relay wiederum bestätigt den Empfang dieser Nachricht dem MMS User Agent A durch die Message M-Delivery.ind. Hierzu sei wieder auf *3G TS 23.140* und *WAP-209-MMSEncapsulation* hingewiesen.

Erfindungsgemäß wird somit ein Verfahren zur Kennzeichnung der Wichtigkeit einer Multimedianachricht MM im Multimedia Messaging Service MMS in der Benachrichtigung des Empfängers über eine für ihn bestimmte, zustellungsbereite MM realisiert. Vorteilhafterweise wird die Wichtigkeit in WAP wie folgt codiert: Feld-Name X-Mms-Priority als 0x0F und Feld-Wert als niedrig, normal oder hoch. Der Empfänger der MM kann dann nach der Benachrichtigung über die vorliegende MM die Entscheidung, ob die MM sofort (immediate retrieval) oder erst später (deferred retrieval) auf das Endgerät übertragen werden soll, von der angegebenen Wichtigkeit der MM abhängig machen. Ferner kann der empfangende User Agent B beim Eintreffen von Benachrichtigungen über zustellungsbereite MM s automatisch der angegebenen Wichtigkeit der MM entsprechend ein sofortiges oder verzögertes Herunterladen der MM veranlassen.

### Tabellen

**Tabelle 1: Zuweisung binärer Codes zu Feldnamen**

| **Name** | **Zugewiesene Nummer** | **laufende Nummer** | **Bemerkung** |
|---|---|---|---|
| Bcc | 0x01 | 1 | aus Tabelle 2 in *WAP-209-MMSEncap-sulation* |
| Cc | 0x02 | 2 | |
| X-Mms-Content-Location | 0x03 | 3 | |
| Content-Type | 0x04 | 4 | |
| Date | 0x05 | 5 | |
| X-Mms-Delivery-Report | 0x06 | 6 | |
| X-Mms-Delivery-Time | 0x07 | 7 | |
| X-Mms-Expiry | 0x08 | 8 | |
| From | 0x09 | 9 | |
| X-Mms-Message-Class | 0x0A | 10 | |
| Message-ID | 0x0B | 11 | |
| X-Mms-Message-Type | 0x0C | 12 | |
| X-Mms-MMS-Version | 0x0D | 13 | |
| X-Mms-Message-Size | 0x0E | 14 | |
| X-Mms-Priority | 0x0F | 15 | |
| X-Mms-Read-Reply | 0x10 | 16 | |
| X-Mms-Report-Allowed | 0x11 | 17 | |
| X-Mms-Response-Status | 0x12 | 18 | |
| X-Mms-Sender-Visibility | 0x13 | 19 | |
| X-Mms-Status | 0x14 | 20 | |
| Subject | 0x15 | 21 | |
| To | 0x16 | 22 | |
| X-Mms-Transaction-Id | 0x17 | 23 | |
| ... | ... | ... | |

**Tabelle 2: Codierung des Prioritätsfelds**

| |
|---|
| ***X-Hms-Priority (0x0F)** :* |
| Priority-value = Low I Normal I High |
| Low = <Octet 128> |
| Normal = <Octet 129> |
| High = <Octet 130> |

**Tabelle 3: M-Send.req**

| **Name** | **Inhalt** | **Bemerkungen** |
|---|---|---|
| X-Mms-Message-Type | Message-type-value = m-send-req | Obligatorisch. |
| | | Spezifiziert den Transaktionstyp. |
| X-Mms-Transaction-ID | Transaction-id-value | Obligatorisch. |
| | | Ein eindeutiges Kennzeichen für die Nachricht. Diese Transaktions-ID identifiziert nur die M-Send.req und die entsprechende Antwort. |
| X-Mms-MMS-Version | MMS-version-value | Obligatorisch. |
| | | Die MMS-Versionsnummer. Gemäß dieser Beschreibung ist die Version 1.0. |
| Date | Date-value | Optional. |
| | | Ankunftszeit der Nachricht beim MMS-Server. Der MMS-Server wird dieses Feld erzeugen, wenn es nicht durch ein Terminal bereitgestellt wird. |
| From | From-value | Obligatorisch. |
| | | Adresse des Nachrichtensenders. |
| | | Dieses Feld MUSS in einer an einen Empfänger gerichteten Nachricht vorhanden sein. Dieses Feld KANN durch den sendenden Client erzeugt oder KANN bei dem MMS-Server durch das Adresseinfügezeichen eingefügt werden. |
| To | To-value | Optional. |
| | | Adresse des Empfängers. |
| | | Beliebige Anzahl an Adressfeldern erlaubt. |
| Cc | Cc-value | Optional. |
| | | Adresse des Empfängers. |
| | | Beliebige Anzahl an Adressfeldern erlaubt. |
| Bcc | Bcc-value | Optional. |
| | | Adresse des Empfängers. |
| | | Beliebige Anzahl an Adressfeldern erlaubt. |
| Subject | Subject-value | Optional. |
| | | Thema der Nachricht. |
| X-Mms-Message-Class | Message-class-value | Optional. |
| | | Klasse der Nachricht. Der Wert Auto bezeichnet eine Nachricht, die automatisch durch den Client erzeugt wird. Wenn die Nachrichtenklasse Auto ist, SOLL das Ursprungsterminal KEINEN Zustellbericht oder Lesebericht anfordern. |
| | | Wenn das Feld nicht vorhanden ist, interpretiert der Empfänger die Nachricht als persönlich. |
| X-Mms-Expiry | Expiry-value | Optional, Voreinstellung: maximal. |
| | | Zeitdauer der Nachricht wird im Server gespeichert oder Zeit zum Löschen der Nachricht. Das Feld hat zwei Formate, entweder absolut oder Intervall. |
| X-Mms-Delivery-Time | Delivery-time-value | Optional: Voreinstellung: unmittelbar. |
| | | Zeit des gewünschten Zustellens. Gibt die frühest mögliche Zustellung der Nachricht an den Empfänger an. Das Feld besitzt zwei Formate, entweder absolut oder Intervall. |
| X-Mms-Priority | Priority-value | Optional. Voreinstellung: normal. |
| | | Priorität der Nachricht für den Empfänger. |
| X-Mms-Content-ID | Content - IDentifier | Optional. |
| | | Dieses Feld definiert den Ort des MM-Elements. |
| X-Mms-Content-Type | Content-type-value | Optional. |
| | | Spezifiziert den Inhaltstyp des MM-Elements. |
| X-Mms-Content-Size | Content-size-value | Optional. |
| | | Gesamtgröße des MM-Elements als Oktalzahl. |
| X-Mms-Content-Name | Content -name | Optional. |
| | | Name des MM-Elements. |
| X-Mms-Content-Related-URI | Location-value | Optional. |
| | | Definiert den Ort eines anderen MM-Elements, auf das das beschriebende MM-Element bezogen ist. |
| X-Mms-External-Link-Flag | External-Link-Flag | Optional. |
| | | Gibt an, ob die MM oder eines ihrer MM-Elemente ein Link zu einem Element außerhalb der gesamten MM enthält. |
| X-Mms-External-Link-Size | External-Link-Size | Optional. |
| | | Gesamtgröße des verbundenen externen Elements als Oktalzahl. |

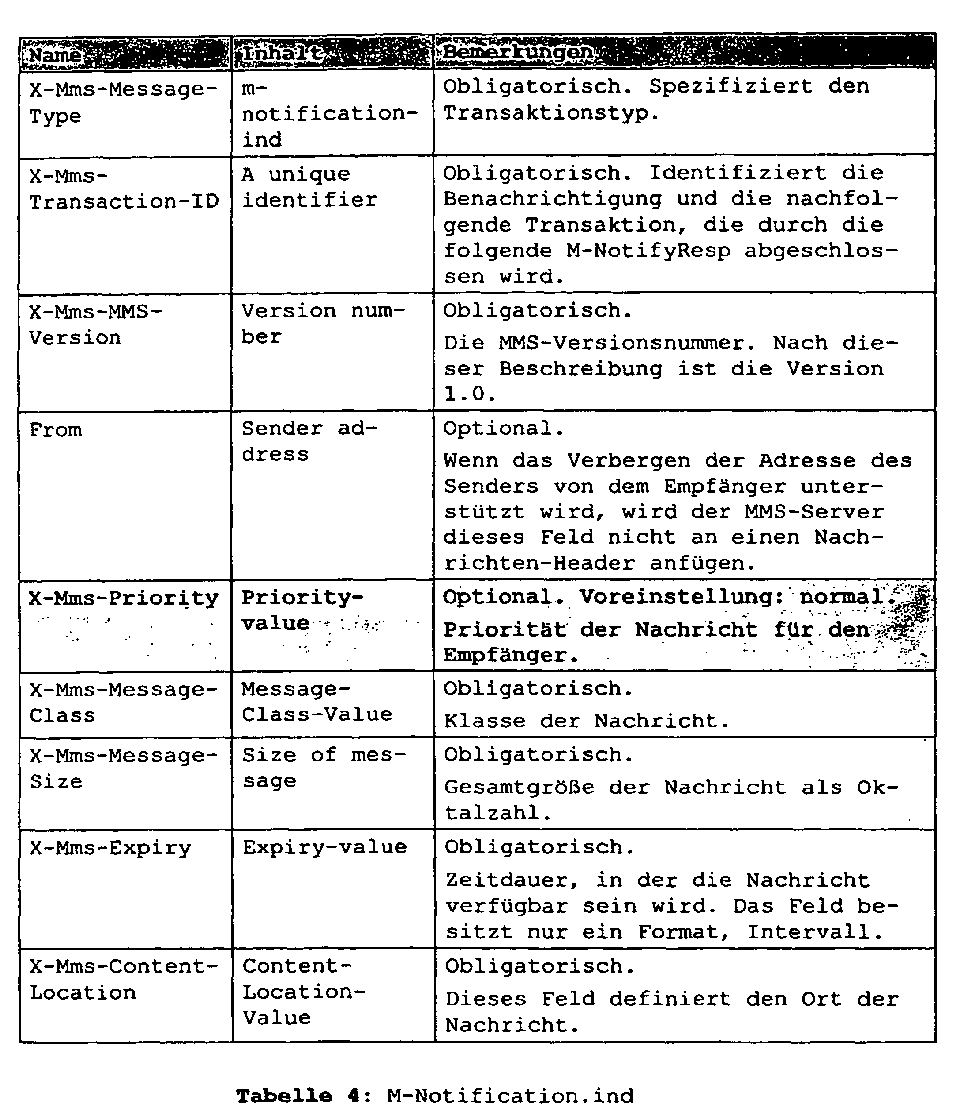

**Tabelle 5: M-Retrieve.conf**

| **Name** | **Inhalt** | **Bemerkungen** |
|---|---|---|
| X-Mms-Message-Type | Message-type-value = m-retrieve-conf | Obligatorisch. |
| | | Spezifiziert den Nachrichtentyp. |
| X-Mms-Transaction-ID | Transaction-id-value | Optional. |
| | | Identifiziert entweder die Transaktion, die durch M-Notification ohne M-NotifResp gestartet worden ist oder eine neue Transaktion, wenn eine spätere Zustellung erbeten wurde. Die neue Transaktions-ID ist optional. |
| X-Mms-MMS-Version | MMS-version-value | Obligatorisch. |
| | | Die MMS-Versionsnummer. In dieser Beschreibung ist die Version 1.0 |
| Message-ID | Message-ID-value | Optional. |
| | | Dies ist eine eindeutige der Nachricht zugewiesende Referenz. Diese ID MUSS immer vorhanden sein, wenn der Absender-Client eine Leseantwort wünscht. |
| | | Die ID ermöglicht es einem Client Leseberichte mit früher gesendeten Nachrichten abzugleichen. |
| Date | Date-value | Obligatorisch. |
| | | Sendedatum und -zeit. |
| From | From-value | Optional. |
| | | Adresse der Senders. Wenn das Verbergen der Sendeadresse von dem Empfänger unterstützt wird, wird der MMS-Server dieses Feld nicht an einen Nachrichten-Header anhängen. |
| To | To-value | Optional. |
| | | Adresse des Empfängers. |
| | | Beliebige Anzahl von Adressfeldern erlaubt. |
| Cc | Cc-value | Optional. |
| | | Adresse des Empfängers. |
| | | Beliebige Anzahl an Adressfeldern erlaubt. |
| Subject | Subject-value | Optional. |
| | | Thema der Nachricht |
| X-Mms-Message-Class | Message-class-value | Optional. |
| | | Nachrichtenklasse. Wenn das Feld nicht vorhanden ist, interpretiert der Empfänger die Nachricht als persönlich. |
| X-Mms-Priority | Priority-value | Optional. Voreinstellung: normal. Priorität der Nachricht. |
| X-Mms-Delivery-Report | Delivery-report-value | Optional. Voreinstellung: nein. Gibt an, ob der Benutzer einen Zustellbericht von jedem Empfänger wünscht. |
| X-Mms-Read-Reply | Read-reply-value | Optional. Voreinstellung: Nein. Gibt an, ob der Benutzer einen Lesebericht von jedem Empfänger als neue Nachricht wünscht. |
| Content-Type | Content-type-value | Obligatorisch. |
| | | Der Inhaltstyp der Nachricht. |

## Patentansprüche

1. Vorrichtung zum Empfangen und Bereitstellen einer Nachricht mit
einer Empfangseinrichtung zum Empfangen der Nachricht von einer Relaisstation (MMS-Relay) und zum Empfangen einer dazugehörigen Benachrichtigung, die angibt, dass in der Relaisstation die Nachricht für den Empfänger bereitsteht,
eine Datenverarbeitungseinrichtung mit der eine Kennung über die Wichtigkeit der in der Relaisstation bereitstehenden Nachricht aus der Benachrichtigung auslesbar ist,
**gekennzeichnet dadurch, dass**
die Vorrichtung derart ausgestaltet ist, dass ein sofortiges Herunterladen der Nachricht, in Abhängigkeit von der in der zugehörigen Benachrichtigung angegebenen Wichtigkeit beim Eintreffen der Benachrichtigung, zum Empfänger automatisch-veranlasst wird.

2. Vorrichtung nach Anspruch 1 mit einer Anzeigeeinrichtung zur Anzeige der Wichtigkeit der bereitstehenden Nachricht aufgrund der empfangenen Kennung.

3. Vorrichtung nach Anspruch 1 oder 2, wobei die Wichtigkeit in zwei oder mehr Stufen in der Kennung codierbar ist.

4. Vorrichtung nach Anspruch 3 mit einer Abfrageeinrichtung zum automatischen Abfragen der bereitstehenden Nachricht von der Relaisstation, falls die Kennung über die Wichtigkeit der Nachricht der höchsten Wichtigkeitsstufe entspricht.

5. Vorrichtung nach einem der Ansprüche 1 bis 4, wobei durch die Datenverarbeitungseinrichtung neben der Kennung über die Wichtigkeit mindestens ein weiterer Datensatz aus der Benachrichtigung exzerpierbar und als Grundlage für ein automatisches Abfragen der Nachricht von der Relaisstation der mindestens eine Datensatz und die Kennung über die Wichtigkeit verwendbar ist.

6. Verfahren zum Empfangen einer Nachricht durch Empfangen einer Benachrichtigung von einer Relaisstation (MMS-Relay), die angibt, dass die Relaisstation die Nachricht bereitgestellt hat,
Exzerpieren einer Kennung über die Wichtigkeit der bereitgestellten Nachricht aus der Benachrichtigung,
**dadurch gekennzeichnet, dass**
ein sofortiges Herunterladen der Nachricht in Abhängigkeit der in der zugehörigen Benachrichtigung angegebenen Wichtigkeit beim Eintreffen der Benachrichtigung zum Empfänger automatisch-veranlasst wird.

7. Verfahren nach Anspruch 6, wobei in der Kennung mindestens zwei Wichtigkeitsstufen codiert werden.

8. Verfahren nach Anspruch 7, wobei die Nachricht automatisch abgefragt wird, wenn die Benachrichtigung die höchste Wichtigkeitsstufe besitzt.

9. Verfahren nach einem der Ansprüche 6 bis 8, wobei aus der Benachrichtigung mindestens ein weiterer Datensatz neben der Kennung der Wichtigkeit exzerpiert wird und die Nachricht auf der Grundlage des mindestens einen Datensatzes und der Kennung über die Wichtigkeit abgefragt wird.

## Claims

1. Device for receiving and providing a message having
a receiving facility for receiving the message from a relay station (MMS Relay) and for receiving an associated notification that indicates that the message for the recipient is available in the relay station,
a data processing facility with which an identifier for the priority of the message available in the relay station can be read from the notification,
**characterised in that**
the device is configured such that immediate downloading of the message is automatically actuated on receipt of the notification by the recipient, depending on the priority indicated in the associated notification.

2. Device according to Claim 1, with a display facility for displaying the priority of the available message on the basis of the received identifier.

3. Device according to Claim 1 or 2, in which the priority can be encoded in two or more levels in the identifier.

4. Device according to Claim 3, with a retrieval facility for automatically retrieving the available message from the relay station if the identifier for the priority of the message is in the highest priority level.

5. Device according to one of the Claims 1 to 4, in which the data processing facility can extract in addition to the priority identifier at least one further data record from the notification and the data record(s) and the priority identifier can be used as the basis for automatically retrieving the message from the relay station.

6. Method for receiving a message by receiving a notification from a relay station (MMS Relay) that indicates that the relay station has made the message available,
extracting an identifier for the priority of the available message from the notification,
**characterised in that**
immediate downloading of the message is actuated on receipt of the notification by the recipient, depending on the priority indicated in the associated notification.

7. Method according to Claim 6, in which at least two priority levels are encoded in the identifier.

8. Method according to Claim 7, in which the message is automatically retrieved if the notification has the highest priority level.

9. Method according to one of the Claims 6 to 8, in which at least one further data record in addition to the priority identifier is extracted from the notification and the message is retrieved on the basis of the data record(s) and the priority identifier.

## Revendications

1. Dispositif pour recevoir et mettre à disposition un message avec un dispositif de réception pour la réception du message d'une station relais (MMS-Relay) et pour la réception d'une information correspondante, qui indique que le message pour le destinataire est disponible à la station relais, un dispositif de traitement de données avec lequel on peut lire un code concernant l'importance du message mis à disposition à la station relais provenant de l'information,
**caractérisé en ce que**
le dispositif est conçu de telle sorte qu'un téléchargement immédiat du message est demandé automatiquement lors de l'arrivée de l'information chez le destinataire en fonction de l'importance indiquée dans l'information spécifique.

2. Dispositif selon la revendication 1, avec un dispositif d'affichage pour l'affichage de l'importance du message mis à disposition sur la base du code reçu.

3. Dispositif selon la revendication 1 ou 2, l'importance pouvant être codée en deux ou plus de deux niveaux dans le code.

4. Dispositif selon la revendication 3 avec un dispositif d'interrogation pour l'interrogation automatique du message mis à disposition par la station relais si le code concernant l'importance du message correspond au niveau d'importance maximum.

5. Dispositif selon l'une quelconque des revendications 1 à 4, au moins un autre ensemble de données pouvant être extrait de l'information par le dispositif de traitement de données parallèlement au code concernant l'importance et pouvant être utilisé comme élément de base pour une interrogation automatique du message par la station relais en ce qui concerne le au moins un ensemble de données et le code concernant l'importance.

6. Procédé pour recevoir un message par la réception d'une information d'une station relais (MMS-Relay) qui indique que la station relais a mis à disposition le message, l'extraction d'un code concernant l'importance du message mis à disposition provenant de l'information,
**caractérisé en ce que**
un téléchargement immédiat du message est demandé automatiquement lors de l'arrivée du message de l'information chez le destinataire en fonction de l'importance indiquée dans l'information correspondante.

7. Procédé selon la revendication 6, au moins deux niveaux d'importance étant codés dans le code.

8. Procédé selon la revendication 7, le message étant interrogé automatiquement lorsque l'information présente le niveau d'information maximum.

9. Procédé selon l'une quelconque des revendications 6 à 8, au moins un autre ensemble de données étant extrait de l'information parallèlement au code de l'importance et le message étant interrogé sur la base du au moins un ensemble de données et du code concernant l'importance.
